# EUROPEAN PATENT APPLICATION

(11) **EP 3 090 932 A1**
(43) Date of publication of application: **09.11.2016**
(21) Application number: 16166290.3
(22) Date of filing: 21.04.2016
(51) Int. Cl.: B62J 1/02, B62J 1/04

(54) **BICYCLE SEAT WITH RESILIENT SUPPORT**

(30) Priority: 22.04.2015 US 201562151009 P; 23.10.2015 US 201562245508 P
(71) Applicant: Specialized Bicycle Components, Inc., Morgan Hill, CA 95037 (US)
(72) Inventor: D'ALUISIO, Christopher P., Corralitos, CA 95076 (US); FOLEY, Aaron, San Jose, CA California (US); BOWERS, Jeffrey K., Bellingham, WA 98229 (US)
(74) Representative: Grünecker Patent- und Rechtsanwälte PartG mbB

(57) **Abstract**

A bicycle seat support (36, 100) comprising a lower engagement member (44, 108), an upper engagement member (42, 104), and a compliant support assembly coupling the upper engagement member (42, 104) to the lower engagement member (44, 108). In one embodiment, the bicycle seat support further comprises an angular adjustment mechanism coupled to the upper engagement member (42, 104) and configured to adjust an angle of the upper engagement member (42, 104) relative to the lower engagement member (44, 108). For example, the angular adjustment mechanism can comprise a lower link coupled (e.g., cantilevered) to the lower engagement member and an intermediate link coupled (e.g., pivotally) between the lower link and the upper engagement member. In one embodiment, the seat support (100) further comprises a bottom out beam (212) cantilevered to the lower engagement member. The bottom out beam (212) is positioned to inhibit downward movement of the upper engagement member after the upper engagement member has deflected downward.

## Description

### BACKGROUND

The present invention relates to bicycle seats, and particularly to resilient seat supports.

Bicycles commonly have resilient seat supports that cushion the rider from vibrations and bumps while riding. Resilient seat supports commonly include coil springs or resilient pads positioned between a seat and a seat post.

Resilient seat supports commonly include a resilient pivoting arrangement that facilitates pivoting of the seat about a pivot axis near the front of the seat. One disadvantage of such pivoting arrangements is that the angle of the seat relative to the bicycle frame changes by several degrees when the seat is pivoting to absorb a shock.

### SUMMARY

The present invention provides a bicycle seat support comprising a lower engagement member adapted to engage a bicycle frame, an upper engagement member adapted to support a bicycle seat (e.g., defining longitudinal recesses for receiving and clamping a bicycle seat), and a compliant support assembly coupling the upper engagement member to the lower engagement member. The upper engagement member is mounted for rotation relative to the lower engagement member. For example, rotational bearings can be operatively positioned between the upper engagement member and the lower engagement member.

In one embodiment, the bicycle seat support further comprises an angular adjustment mechanism coupled to the upper engagement member and configured to adjust an angle of the upper engagement member relative to the lower engagement member. For example, the angular adjustment mechanism can comprise a lower link coupled to the lower engagement member and an intermediate link coupled between the lower link and the upper engagement member. Preferably, the intermediate link is secured to the upper engagement member in one of a plurality of adjustable positions.

The compliant support assembly can include a beam cantilevered to the lower engagement member and pivotally coupled to the upper engagement member, and the angular adjustment mechanism can be arranged to adjust an angle of the upper engagement member relative to the beam. Preferably, the beam is a first beam and the angular adjustment mechanism comprises a second beam coupled (e.g., cantilevered) to the lower engagement member and an intermediate link coupled (e.g., pivotally) between the first and second beams. In this manner, the lower engagement member, the first beam, the intermediate link, and the second beam can define a double cantilevered four bar linkage. In one embodiment, the seat support further comprises a bottom out beam cantilevered to the lower engagement member with a space between the bottom out beam and the upper engagement member. The bottom out beam is positioned to inhibit downward movement of the upper engagement member relative to the lower engagement member after the upper engagement member has deflected downward relative to the lower engagement member.

Other aspects of the invention will become apparent by consideration of the detailed description and accompanying drawings.

### BRIEF DESCRIPTION OF THE DRAWINGS

Fig. 1 illustrates a side view of a bicycle having a bicycle seat assembly embodying the present invention and including a bicycle seat supported by a bicycle seat support.
Fig. 2 is a side view of the bicycle seat support of Fig. 1.
Fig. 3 is a rear view of the bicycle seat support of Fig. 1.
Fig. 4 is a rear perspective view of the bicycle seat support of Fig. 1.
Fig. 5 is a front perspective view of the bicycle seat support of Fig. 1.
Fig. 6 is an exploded view of the bicycle seat support of Fig. 1.
Fig. 7 is a section view taken along line 7-7 in Fig. 2.
Fig. 8 is a rear perspective view of another bicycle seat support for the bicycle of Fig. 1.
Fig. 9 is another rear perspective view of the bicycle seat support of Fig. 8.
Fig. 10 is a front perspective view of the bicycle seat support of Fig. 8.
Fig. 11 is a side view of the bicycle seat support of Fig. 8.
Fig. 12 is an exploded view of the bicycle seat support of Fig. 8.
Fig. 13 is a section view of the bicycle seat support taken along line 13-13 in Fig, 10.
Fig. 14 is a side view of the bicycle seat support of Fig. 8 illustrating the seat support in an unflexed position.
Fig. 15 is a side view of the bicycle seat support of Fig. 8 illustrating the seat support in a first flexed position.
Fig. 16 is a side view of the bicycle seat support of Fig. 8 illustrating the seat support in a second flexed position.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

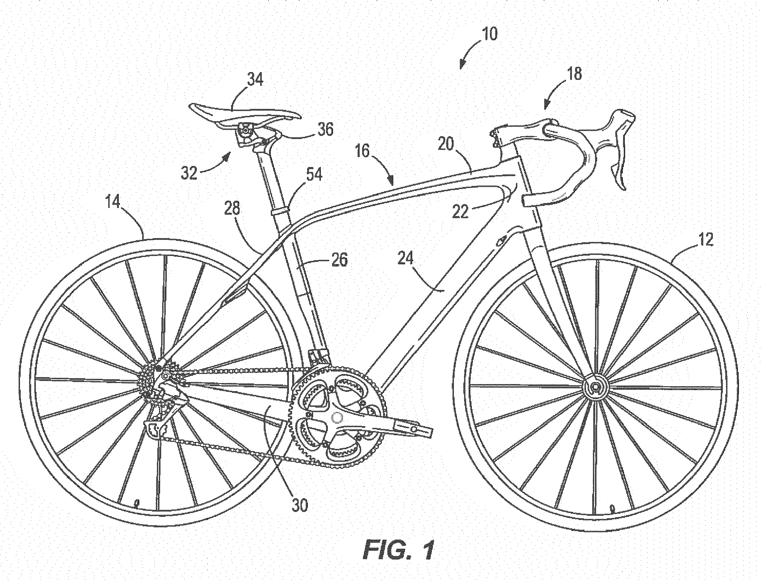

Fig. 1 illustrates a bicycle 10 that includes a front wheel 12, a rear wheel 14, a frame 16, and a steering assembly 18. The frame 16 includes a top tube 20, a head tube 22, a down tube 24, a seat tube 26, seatstays 28, and chainstays 30. A bicycle seat assembly 32 is supported by the frame 16 and provides a surface upon which a rider sits while riding the bicycle 10. The bicycle seat assembly 32 includes a bicycle seat 34 supported by a bicycle seat support 36. The illustrated bicycle seat 34 is a standard seat having a contoured upper surface for supporting the rider, and lower rails 40 adapted to be secured to the bicycle seat support 36.

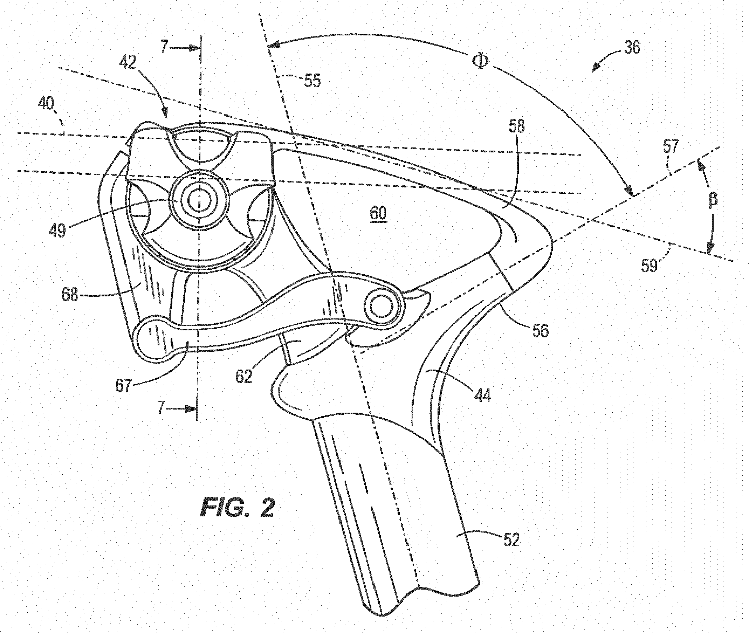

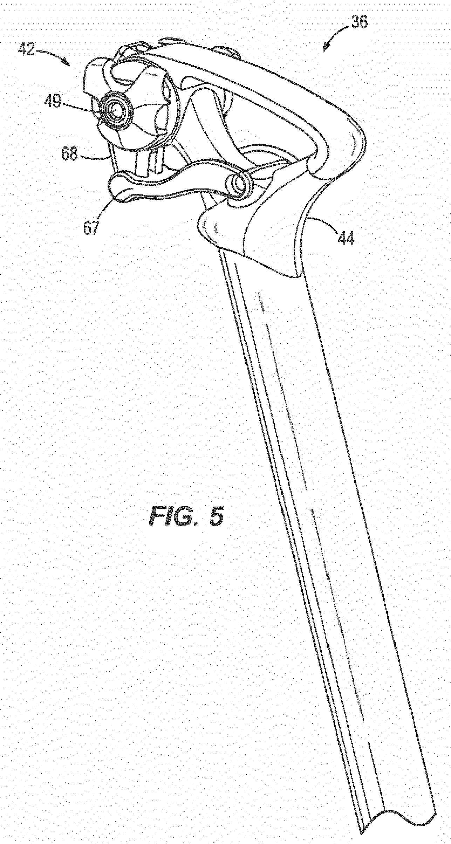

Referring to Figs. 2-7, the bicycle seat support 36 includes an upper engagement member 42 engaged with and supporting the lower rails 40, a lower engagement member 44 secured to and supported by the seat tube 26 of the frame 16, a compliant support assembly connecting the upper engagement member 42 to the lower engagement member 44, and an angular adjustment mechanism that adjusts the angle of the upper engagement member 42 relative to the compliant support assembly.

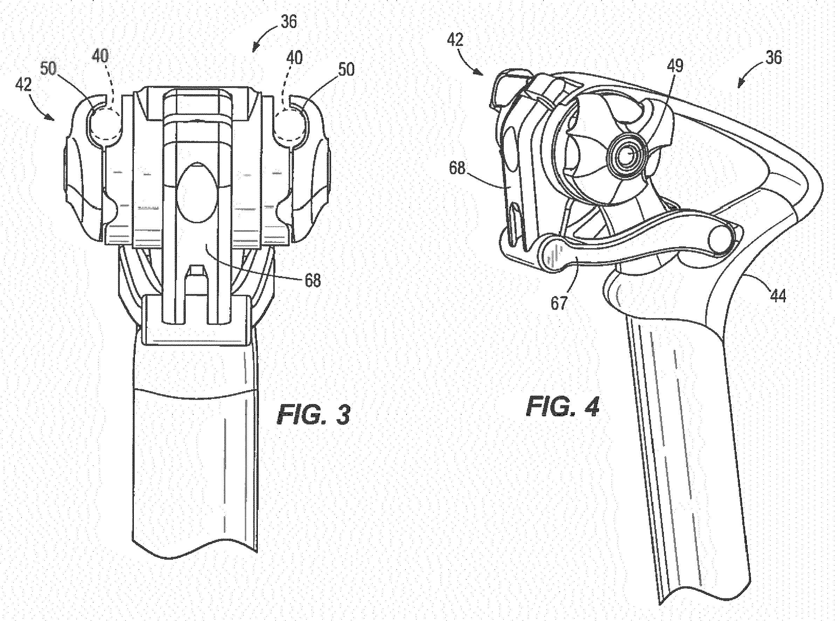

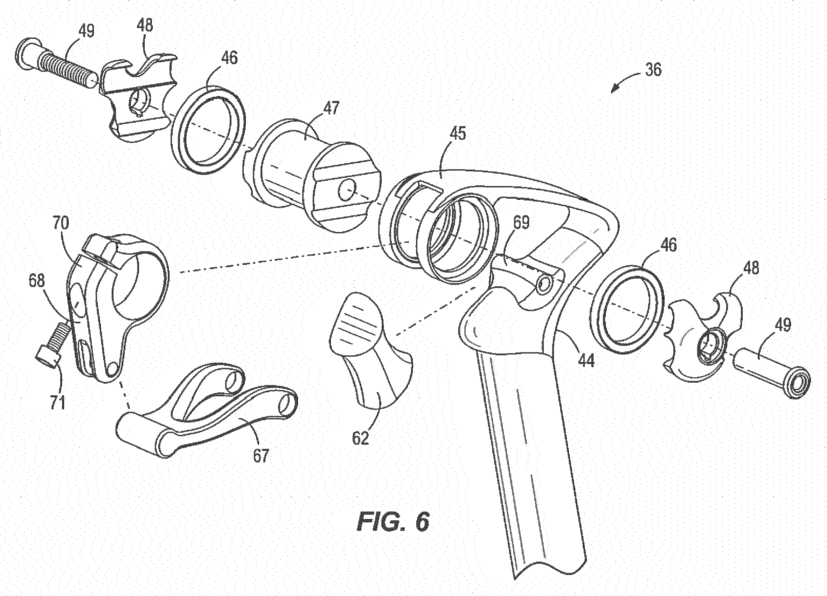

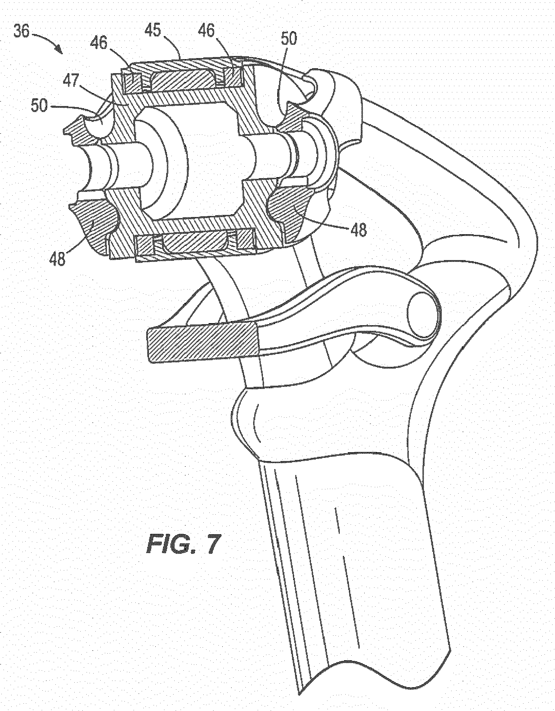

The illustrated upper engagement member 42 (Fig. 6) includes a cylindrical mount 45, two bearings 46, a support spool 47, two clamp members 48, and fasteners 49. The support spool 47 and clamp members 48 cooperatively define longitudinal recesses 50 (Figs. 3 and 7) for receiving and clamping the lower rails 40 of the bicycle seat 34. The bearings 46 are operatively positioned between the support spool 47 and the cylindrical mount 46 such that the support spool 47 and clamps 48 are rotationally mounted to the cylindrical mount 46. Because the seat 34 is secured to the support spool 47 and clamps 48, the seat is similarly rotationally supported by the cylindrical mount 46.

The illustrated lower engagement member 44 comprises a cylindrical seat post 52 secured inside the seat tube 26 of the frame 16 by a clamp 54 (Fig. 1). The seat post 52 defines a lower axis 55 (see Fig. 2). It should be understood that the lower engagement member 44 could instead comprise any other structure for supporting the bicycle seat support 36 relative to the frame 16.

Referring to Fig. 2, the illustrated compliant support assembly includes a first cantilevered beam 56 defining a first axis 57, a second cantilevered beam 58 defining a second axis 59 and spaced from the first cantilevered beam 56 to define a gap 60, and a resilient member 62 positioned in the gap 60. The first cantilevered beam 56 includes a proximal portion cantilevered to the lower engagement member 44, and the second cantilevered beam 58 includes a proximal portion cantilevered to a distal portion of the first cantilevered beam 56. A distal portion of the second cantilevered beam is secured to the cylindrical mount 45 of the upper engagement member 42.

The first axis 57 is positioned at an angle Φ of about seventy-five degrees relative to the lower axis 55 of the seat post 52, and the second axis 59 is positioned at an angle β of about forty-seven degrees relative to the first axis 57. Each of the first and second cantilevered beams 56, 58 comprises a composite material (e.g., carbon fibers in an epoxy matrix) that is sufficiently flexible to resiliently support a rider positioned on the bicycle seat 34. In the illustrated embodiment, the first cantilevered beam 56 is formed integrally with the lower engagement member 44 as a one-piece molded composite member. The illustrated second cantilevered beam 58 and cylindrical mount 45 are integrally formed of a resilient material, such as titanium, steel, or another alloy having sufficient shape memory characteristics, and are secured to the first cantilevered beam 56 as a secondary operation, such as by bonding. Flexing of the cantilevered springs 56, 58 results in vertical movement of the seat 34, and very little horizontal movement of the seat 34. In another example, the second cantilevered beam 58 includes a pair of parallel-oriented alloy plates (e.g., steel, titanium, or another alloy having sufficient shape-memory characteristics).

The illustrated angular adjustment mechanism includes a lower link 67 and an intermediate link 68. The lower link 67 is pivotally mounted to a lower pivot mount 69 (e.g., by a fastener, such as a cotter pin or bolt) on an upper surface of the lower engagement member 44. The intermediate link 68 includes a lower end that is pivotally coupled to the lower link 67 and an upper end that is secured to and movable with the support spool 47. By virtue of this arrangement, a cantilevered four-bar linkage is created by the first cantilevered beam 56, the second cantilevered beam 58, the intermediate link 68, and the lower link 67 (see Fig. 2). This arrangement is designed to substantially maintain an angular orientation of the support spool 47 (and the attached seat 34) relative to the seat post 52.

The connection between the intermediate link 68 and the support spool 47 is adjustable so that the static angular position of the seat 34 relative to the seat post 52 can be adjusted. Specifically, the upper end of the intermediate link 68 includes a clamp 70 with a fastener 71 that can be tightened onto the support spool 47 at any of a number of different angular orientations. In order to adjust the angle of the seat 34, the fastener 71 is loosened to thereby loosen the engagement of the clamp 70 on the support spool 47. The seat 34 can then be tilted to the desired angle, resulting in rotational movement of the support spool 47 relative to the clamp 70. When the desired seat angle is achieved, the fastener 71 can then be tightened to secure the intermediate member 68 to the support spool 47.

The resilient member 62 provides additional resilient support to the bicycle seat 34. The resilient member 62 comprises a polyurethane elastomer having a hardness less than the hardness of the cantilevered beams 56, 58. In the preferred embodiment, the resilient member 62 is permanently secured in the gap 60, such as by adhesive. Alternatively, the resilient member 62 can be held in place in any other appropriate manner, such as using an interference fit, mechanical engagement, or fasteners.

In an alternative embodiment, the resilient member 62 can be secured in the gap in such a manner that it can be removed from the gap 60 by the user so that a different resilient member can be used. For example, if the resilient member 62 becomes damaged or worn, a replacement resilient member can be substituted. Alternatively, if it is desired to achieve a different resiliency, a resilient member having a different stiffness can be used. For example, if it desired to increase the stiffness of the compliant support assembly 46, a resilient member having less resiliency can be substituted into the gap 60. Such a replacement resilient member could use a stiffer material or a thicker cross section, for example.

In use, the bicycle seat support 36 operates in the following manner. As the bicycle encounters a bump, the frame 16 and seat post 52 will be forced upward. Such upward movement will be at least partially absorbed by the resilient member 62. As noted above, the angular adjustment mechanism defines a four-bar linkage that serves to inhibit angular rotation of the seat 34 relative to the seat post 52 during the shock absorption. Specifically, as the seat 34 moves downward relative to the seat post 52, the lower link 67 and intermediate link 68 serve to inhibit the seat 34 from tilting rearward a substantial amount. In this manner, the user will feel securely positioned on the seat.

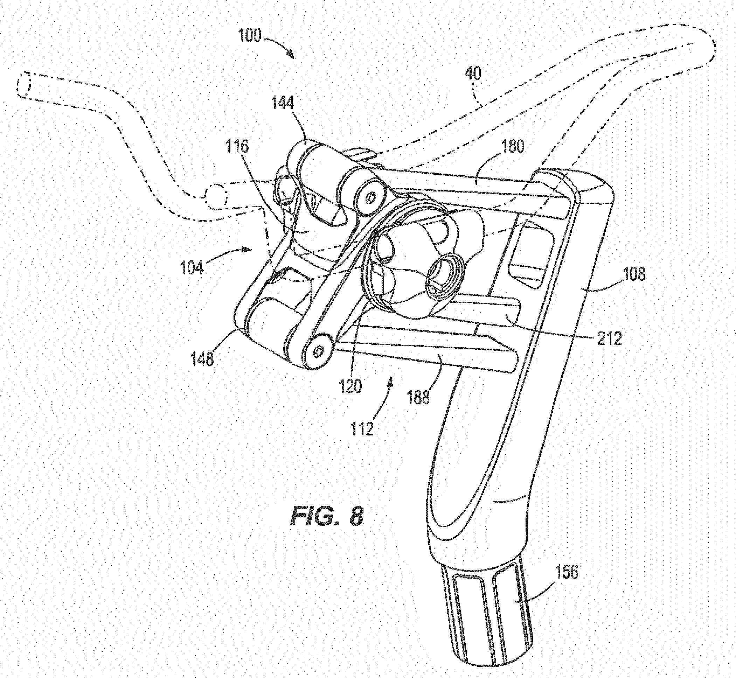

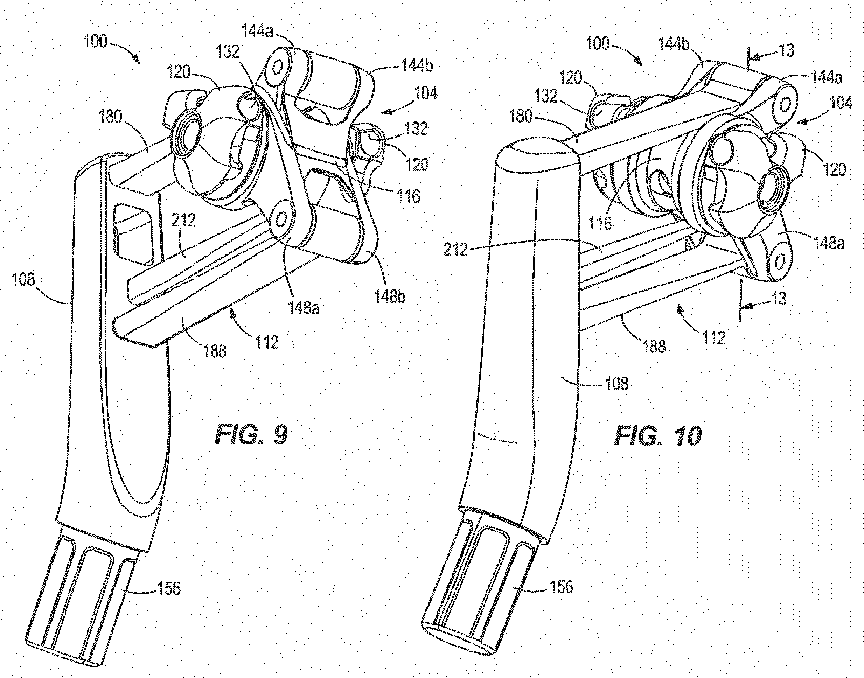

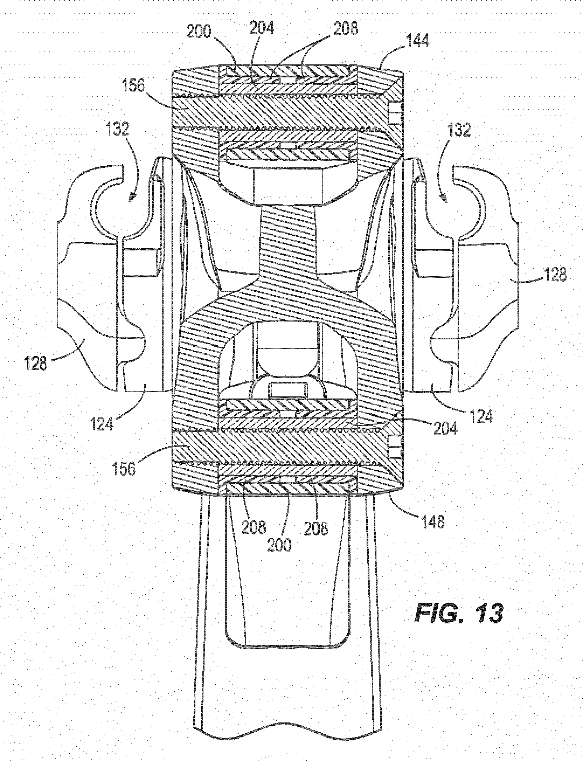

Figs. 8-16 illustrate another bicycle seat support 100 for supporting the bicycle seat 34. The bicycle seat support 100 includes an upper engagement member 104 engaged with and supporting the lower rails 40 of a bicycle seat, a lower engagement member 108 secured to and supported by the seat tube 26 of the frame 16, and a compliant support assembly 112 connecting the upper engagement member 104 to the lower engagement member 108. As shown in Figs. 8-10 and 12, the illustrated upper engagement member 104 includes a mount or base 116 and clamp members 120. Each of the clamp members 120 includes a first clamp 124 and a second clamp 128 that cooperatively define longitudinal recesses 132 for receiving and clamping the lower rails 40 of the bicycle seat. As illustrated in Fig. 13, each second clamp 128 is partially seated or nested in the corresponding first clamp 124.

Each of the first clamps 124 has a base portion 136 that is engaged with the base 116 within a cylindrical cavity 140 disposed on a lateral side of the base 116. Fasteners (e.g., like the fasteners 49 illustrated in Fig. 6) attach the clamp members 120 to the base 116. With reference to Figs. 8-12, the base 116 also includes a detachable wear plate 142, a first pivot support 144 that extends generally upward from a central portion of the base 116, and a second pivot support 148 that extends generally downward from the central portion. The first pivot support 144 is defined by two first arms or posts 144a, 144b that are spaced apart from each other in the lateral direction. Similarly, the second pivot support 148 is defined by two second arms or posts 148a, 148b that are spaced apart from each other in the lateral direction. The first posts 144a, 144b have holes 154 and the second posts 148a, 148b have holes 152, with one of the illustrated holes 152, 154 for each pivot support 144, 148 being threaded and the other hole 152, 154 in each post pair being unthreaded (e.g., with a countersink).

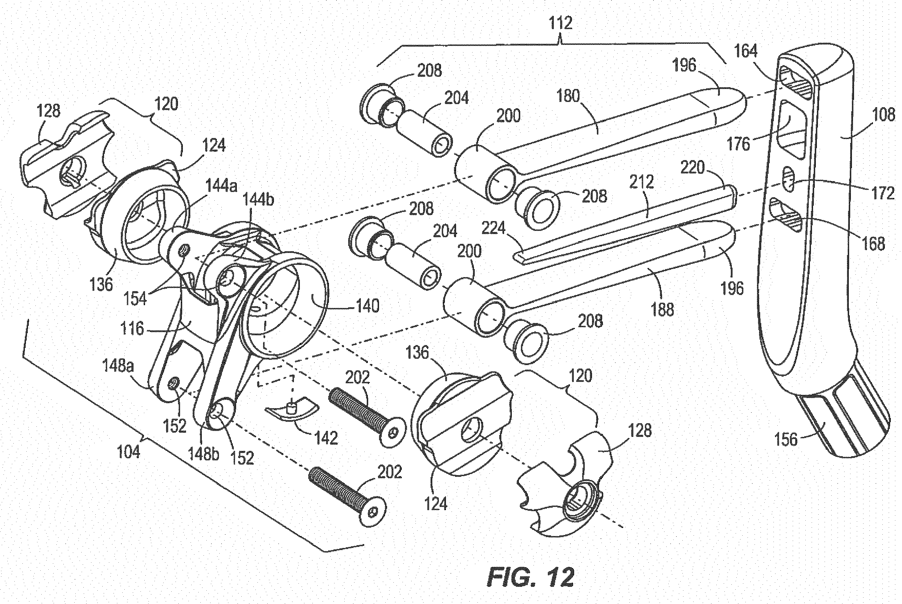

The illustrated lower engagement member 108 has a seat post plug 156 that can be secured inside a seat post (not shown in Figs. 8-12), which can be attached to the seat tube 26 of the frame 16 by a clamp (Fig. 1), as is known in the art. Referring to Figs. 12 and 14-16, the lower engagement member defines a lower axis 160 and has an upper beam opening 164, a lower beam opening 168, and a central beam opening 172 that is disposed between the upper and lower beam openings 164, 168. The upper and lower beam openings 164, 168 are elongated laterally (i.e. the beam openings 164, 168 are elongated across the lower axis 160). The illustrated central beam opening 172 is square or nearly square in cross section. In general, the central beam opening 172 preferably has a ratio of height-to-width that is closer to 1:1 than a ratio defined by the height-to-width of the upper or lower beam opening 164, 168. The lower engagement member 108 can have one or more additional cavities 176 (one shown) that reduces the overall weight of the lower engagement member 108.

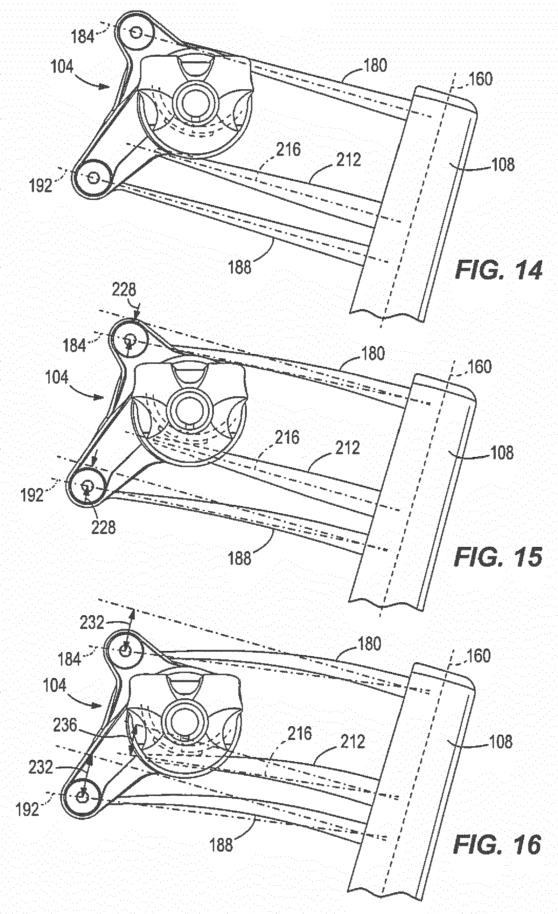

The illustrated compliant support assembly includes a first cantilevered beam 180 that defines a first axis 184 (Figs. 14-16), and a second cantilevered beam 188 that defines a second axis 192 and that is spaced from the first cantilevered beam 180 to define a gap. Each of the first axis 184 and the second axis 192 is defined as a straight line or plane extending through the ends of the respective beams 180, 188. The illustrated first and second beams 180, 188 are the same, and each of the first and second beams 180, 188 has a proximal portion 196 that is cantilevered to the lower engagement member 108 within one of the respective upper and lower beam openings 164, 168. The proximal portion 196 of each cantilevered beam 180, 188 can be frictionally-fit within the openings 164, 168 in the lower engagement member 108 with or without adhesive to secure the beams 180, 188 in place. A distal portion 200 of each of the first and second cantilevered beams 180, 188 defines a hollow pivot that is attached to the base 116 by fasteners 202.

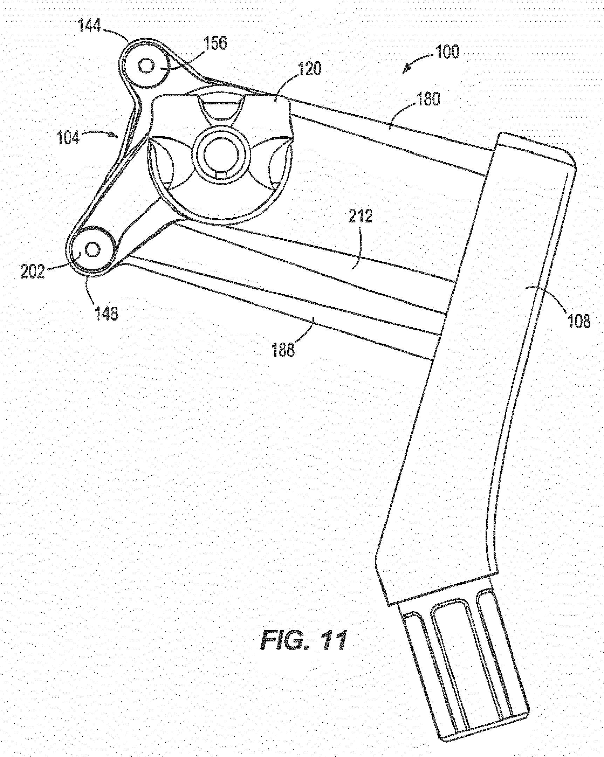

With reference to Figs. 11 and 14-16, the first and second cantilevered beams 180, 188 taper (i.e. become thinner) from the proximal portion 196 toward the distal portion 200. The first and second beams 180, 188 are formed of a resilient material (e.g., a composite such as carbon fibers in an epoxy matrix, a metal or metal alloy such as titanium, steel, or another alloy having sufficient shape memory characteristics, etc.) that is sufficiently flexible to resiliently support a rider positioned on the bicycle seat 34. Although the illustrated beams 180, 188 are described in detail as being the same, the beams 180, 188 can have different resiliencies or rates of deflection (e.g., one beam can be thinner or thicker than the other or the beams can be formed of different materials, etc.).

A bearing 204 is disposed in the pivot of each distal portion 200, and caps or spacers 208 encapsulate opposite ends of the bearings 204 to support the bearing within the pivot. The spacers 208 also define bearing surfaces so that the bearings 204 can rotate relative to the beams 180, 188.

The first beam 180 extends over the central portion of the base 116, and the distal portion 200 of the first beam 180 is pivotally attached to the base 116 by a fastener 202 that attaches to the first posts 144a, 144b and that extends through the corresponding bearing 204. The fastener 202 is threaded into one of the first posts 144a. The second beam 188 extends below the central portion of the base 116, and the distal portion 200 of the second beam 188 is pivotally attached to the base 116 by another fastener 202 that attaches to the second posts 148a, 148b and that extends through the corresponding bearing 204. The fastener 202 for the second beam 188 is threaded into one of the second posts 148a.

The compliant support assembly 112 also includes a bottom out beam in the form of a third cantilevered beam 212 that is positioned in a gap between the first and second cantilevered beams 180, 188. The third beam 212 has an axis 216 that is defined as a straight line extending through the ends of the third beam 212. The third cantilevered beam 212 has a proximal portion 220 that is cantilevered to the lower engagement member 108 within the central beam opening 172. The proximal portion 220 of the third cantilevered beam 212 can be frictionally-fit within the central opening in the lower engagement member 108 with or without adhesive to secure the beam 212 in place, The third cantilevered beam 212 tapers (i.e. becomes narrower) from the proximal portion 220 toward a distal portion 224. The third beam 212 is formed of a resilient material (e.g., a composite such as carbon fibers in an epoxy matrix, a metal or metal allow such as titanium, steel, or another alloy having sufficient shape memory characteristics, etc.) that is sufficiently flexible to resiliently support a rider positioned on the bicycle seat 34. The material of the third beam 212 can be the same as or different from the material of the first and second beams 180, 188. Also, the cross-sectional shape of the illustrated third beam 212 is generally squarer than the cross-sectional shape of the first and second beams 180, 188. Stated another way, the third beam 212 is generally less resilient (i.e. stiffer) than the first and second beams 180, 188.

Fig. 14 illustrates the seat support 100 in an unflexed or unloaded position (i.e. a static position with no force or weight acting on or applied to the seat 34). In the first position, the first, second, and third axes 184, 192, 216 are parallel to each other and generally perpendicular to the lower axis 160 of the seat post 108. The pivotal connection between the base 116 and the first and second beams 180, 188 effectively defines a double cantilevered four-bar linkage that supports the seat 34 in a level position. The third beam 212 is not in contact with the base 116 in the unflexed position.

Fig. 15 illustrates the seat support 100 in an exemplary first flexed position due to a load being applied to the seat 34 (e.g., when a rider is seated on the bicycle 10 and the bicycle is encountering a bump). The load is transferred through the clamp members 120 to the first and second beams 180, 188, which flex a first amount (represented by a distance 228) under the load. Flexing of the cantilevered beams 180, 188 results in vertical movement of the seat 34 and very little horizontal movement or rotation of the seat 34 relative to the engagement member 108. In the first flexed position, the first and second axes 184, 192 are oriented at an obtuse angle relative to the lower axis 160. As shown in Fig. 15, the load flexes the seat support (i.e. the first and second beams 180, 188 deflect) until the third beam 212 contacts the wear plate 142 on an underside of the base 116 in the first flexed position. In the illustrated first flexed position, the third beam 212 is not substantially flexed or deflected (i.e., the third axis 216 remains perpendicular to the lower axis), although the load sufficiently biases the seat support 100 downward such that the third beam 212 initially contacts the wear plate 142 on the underside of the base 16.

Fig. 16 illustrates the seat support 100 in a second flexed position due to a larger load being applied to the seat 34. The load is transferred through the clamp members 120 to the first and second beams 180, 188, which flex a second amount (represented by a distance 232) under the larger load. The third beam 212 also flexes under the additional load an amount (represented by a distance 236). The wear plate 142, which can be formed of a material that is different from the base 116, limits wear on or damage to the base 116. Flexing of the cantilevered beams 180, 188 results in additional vertical movement of the seat 34 and very little horizontal movement or rotation of the seat 34. In the illustrated second flexed position, the first and second axes 184, 192 are oriented at a larger obtuse angle relative to the lower axis 160. In general, the third beam 212, with its higher resistance to deflection, provides additional resilient support to the seat 34 in order to prevent over-stressing the first and second beams 180,188. It will be appreciated that the seat support 100 can be flexed to numerous positions and that the first and second flexed positions illustrated in Figs. 15 and 16 are only two exemplary flexed positions.

The pivotal connection between the compliant support assembly 112 and the base 116 keeps the seat 34 substantially level in the unflexed position and in each flexed position. Stated another way, the seat support 100 allows the base 116 to pivot or rotate relative to the distal portions 200 of the first and second beams 180, 188 when a load is applied to the seat 34. The third beam 212 comes into contact with the base 116 at a given deflection, which is dependent on the resiliency or deflection of the first and second beams 180, 188. In the illustrated example, the third beam 212 is stiffer such that the deflection or spring rate of the compliant support assembly 112 increases compared to the deflection or spring rate defined only by the first and second beams 180, 188. The spring rate is linear before and after the third beam 212 comes into contact with the base 116, but the spring rate increases in magnitude when the third beam 212 makes contact, 188. The spring rate defined by the first and second beams 180, 188, and the spring rate defined by the third beam 212, can be adjusted by switching out the respective beams with other beams that have a higher or lower deflection rate, depending on the amount of deflection per unit of load that is desired.

Various features and advantages of the invention are set forth in the following claims.

## Claims

1. A bicycle seat support comprising:
a lower engagement member adapted to engage a bicycle frame;
an upper engagement member adapted to support a bicycle seat, wherein the upper engagement member is mounted for rotation relative to the lower engagement member; and
a compliant support assembly coupling the upper engagement member to the lower engagement member.

2. A bicycle seat support as claimed in claim 1, further comprising rotational bearings operatively positioned between the upper engagement member and the lower engagement member.

3. A bicycle seat support as claimed in claim 1, wherein the upper engagement member defines longitudinal recesses for receiving and clamping a bicycle seat.

4. A bicycle seat support as claimed in claim 1, further comprising an angular adjustment mechanism coupled to the upper engagement member and configured to adjust an angle of the upper engagement member relative to the lower engagement member.

5. A bicycle seat support as claimed in claim 4, wherein the angular adjustment mechanism comprises a lower link coupled to the lower engagement member and an intermediate link coupled between the lower link and the upper engagement member.

6. A bicycle seat support as claimed in claim 5, wherein the intermediate link is secured to the upper engagement member in one of a plurality of adjustable positions.

7. A bicycle seat support as claimed in claim 5, wherein the intermediate link is secured to the upper engagement member.

8. A bicycle seat support as claimed in claim 7, wherein the compliant support assembly includes a cantilevered beam and wherein the intermediate link pivotally connects the cantilevered beam and the lower link.

9. A bicycle seat support comprising:
an upper engagement member adapted to support a bicycle seat;
a lower engagement member adapted to engage a bicycle frame;
a beam cantilevered to the lower engagement member and pivotally coupled to the upper engagement member; and
an angular adjustment mechanism that adjusts an angle of the upper engagement member relative to the beam.

10. A bicycle seat support as claimed in claim 9, wherein the upper engagement member defines longitudinal recesses for receiving and clamping a bicycle seat.

11. A bicycle seat support as claimed in claim 9, wherein the beam is a first beam and wherein the angular adjustment mechanism comprises:
a second beam coupled to the lower engagement member; and
an intermediate link coupled between the second beam and the upper engagement member.

12. A bicycle seat support as claimed in claim 11, wherein the second beam is cantilevered to the lower engagement member.

13. A bicycle seat support as claimed in claim 12, wherein the second beam is pivotally coupled to the intermediate link.

14. A bicycle seat support as claimed in claim 13, wherein the lower engagement member, the first beam, the intermediate link, and the second beam define a double cantilevered four bar linkage.

15. A bicycle seat support as claimed in claim 9, wherein the seat support further comprises a bottom out beam cantilevered to the lower engagement member with a space between the bottom out beam and the upper engagement member, the bottom out beam being positioned to inhibit downward movement of the upper engagement member relative to the lower engagement member after the upper engagement member has deflected downward relative to the lower engagement member.
